# EUROPEAN PATENT SPECIFICATION

(11) **EP 3 109 081 B1**
(45) Date of publication and mention of the grant of the patent: **25.07.2018**
(21) Application number: 16151906.1
(22) Date of filing: 19.01.2016
(51) Int. Cl.: B60J 7/00, B60J 1/20

(54) **ROLLO ASSEMBLY**
ROLLOANORDNUNG
ENSEMBLE FORMANT ROULEAU

(30) Priority: 24.06.2015 CN 201520437822 U
(43) Date of publication of application: 28.12.2016
(73) Proprietor: Inalfa Roof Systems Group B.V., 5804 AB Venray (NL)
(72) Inventor: KELLER, Dave, Ortonville, MI Michigan 48462 (US); SEBESTA, Mark, Howell, MI Michigan 48855 (US)
(74) Representative: De Vries & Metman

(56) References cited:
- EP-A2- 2 182 161
- FR-A1- 2 886 332
- JP-A- 2011 046 285

## Description

The invention relates to a rollo assembly according to the preamble of claim 1.

In a known type of rollo assembly for example used in vehicles the longitudinal edges of the sunscreen comprise a thicker part having a particular width. While winding the rollo screen on to the winding shaft, the longitudinal edges are stacked onto each other. Because of the longitudinal edges being thicker than the remainder of the sunscreen the stacked edges will be tightly wound around the winding shaft on top of each other, but the sunscreen remainder part having a smaller thickness is wound up in a loose way causing wrinkles in the cloth. Such wrinkles are undesirable with respect to a condition in which the rollo is unwound and the wrinkled sunscreen is disclosed to a customer.

FR-2.886.332-A1 already discloses a rollo assembly in which said mounting parts each comprises a radial shaped recessed part, extending in a direction parallel to the centre axis of rotation of the winding shaft, wherein the diameter of the recessed part is substantially smaller than the outside diameter of the winding shaft to provide space for the stacked longitudinal edges of which a first winding, adjacent to the mounting part, may have a smaller diameter than the first winding of the remainder of the rollo screen. As a result of providing space by the recessed part the stacked longitudinal edges are capable to be wound up starting with a smaller diameter of the recessed part of the mounting part and the remainder of the cloth can be wound up on the winding shaft on a larger diameter, thus in a tighter manner and so avoiding wrinkles when the sunscreen is in a wound up condition.

It is an object of the present invention to provide an improved rollo assembly of the above mentioned type. Thus in accordance with the present invention a rollo assembly is characterized as set forth in claim 1. This further reduces material weight and cost compared to a mounting part having a recessed part with a closed surface.

Each of the mounting parts may comprise a radial part extending in a direction parallel to the centre axis of rotation, having a diameter which fits tightly in the inner part of the winding shaft and an additional integrated lock cooperating with a notch in the winding shaft provided to secure the mounting part against radial displacement with respect to the winding shaft. The tight fit between the mounting part and the inner of the winding shaft may be created by means of circumferential chamfered hooks that may be deformed to get a good grip. Also each of the mounting parts may comprise a radial part extending in a direction parallel to the centre axis of rotation and adjacent to the winding shaft, which has a diameter which is the same as the outside diameter of the centre axis of rotation to make sure that this radial part will support a part of the remainder of the sunscreen in such a way that the sunscreen material will not be damaged in the process of winding and unwinding the sunscreen. The recessed part of the mounting part extends in a direction parallel to the centre axis of rotation, over a distance that may be substantially larger compared to the width of the thicker part of the longitudinal edges in said direction. This is to make sure that all of the width of the thicker part of the longitudinal edges is to be accommodated in the recessed part and so the remainder of the cloth can be wound up in a tight way.

In one embodiment the recessed part of the mounting part, extending in a direction parallel to the centre axis of rotation, is provided with a first end near the winding shaft, and an opposite end remote from the winding shaft and wherein at each of these ends the diameter of the recessed part gradually decreases from a diameter which is the same as the diameter of the winding shaft to a substantially smaller diameter. In another embodiment the recessed part of the mounting part extends in a direction parallel to the centre axis of rotation over the remainder of the length of the mounting part. The latter solution may save some material weight and costs.

The surface of the recessed part of the mounting part in accordance with the present invention is an open surface formed by a rib structure being an integral part of the mounting part. The ribs of the rib structure may extend in an outward direction from a core part of the mounting part towards a radial contour which is the same as the diameter of the recessed part.

Hereinafter the invention will be elucidated while referring to the drawings in which embodiments of the rollo assembly according to the invention are shown and in which:
Figure 1 shows an isometric view of a rollo assembly;
Figure 2 shows a plan view of the winding shaft including some windings of the rollo screen;
Figure 3 shows a cross sectional view across one end of the winding shaft and the mounting part;
Figure 4 shows a cross sectional view of the winding shaft, opposite to the end shown in figure 3;
Figure 5 shows an isometric view of the end of the winding shaft and mounting part corresponding to figure 4;
Figure 6 shows a cross section across the mounting part and rib structure.

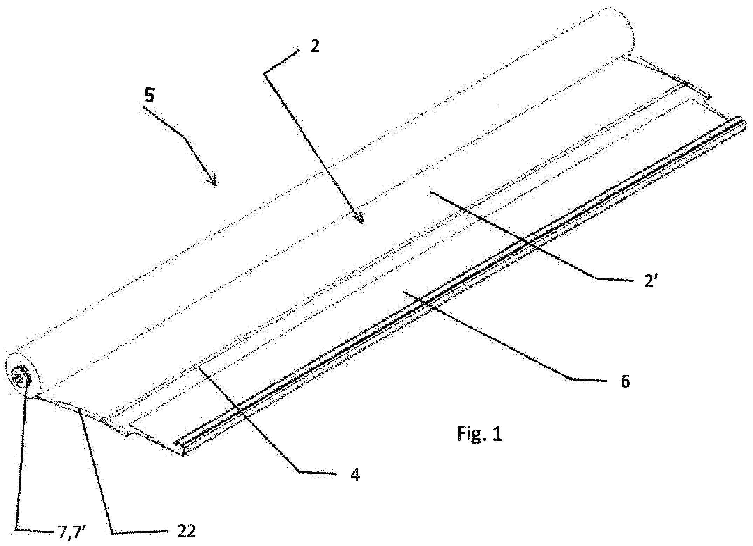

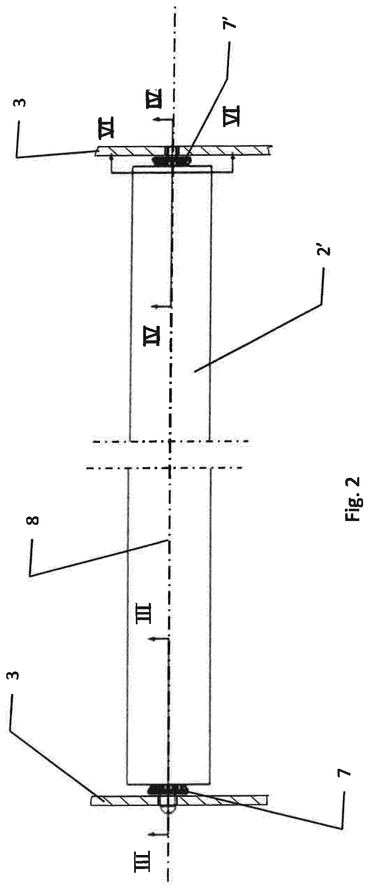

Referring to figures 1 and 2 a rollo assembly 5 according to the invention is shown comprising a winding shaft 1 for a rollo screen 2 mounted for rotation in stationary mounting assembly 3. The rollo screen 2 has transverse edges 4, one of which is connected to the winding shaft 1 and an opposite transverse end is connected to a pull beam 6. Furthermore the rollo screen is provided with longitudinal edges 22 that have a particular width and a thickness that is larger than the thickness of the remainder 2' of the rollo screen 2. As can be seen in fig.1 the rollo screen 2 can be wound up on to the winding shaft 1, the winding shaft being able to rotate around a centre axis of rotation 8. The extreme ends of the winding shaft 1 comprise at each opposite end a mounting part 7,7', wherein each of the mounting parts 7 is engaging the stationary mounting assembly 3 such that the winding shaft 1 is able to rotate. Further in fig 2 the centre axis of rotation 8 of the winding shaft 1 is shown.

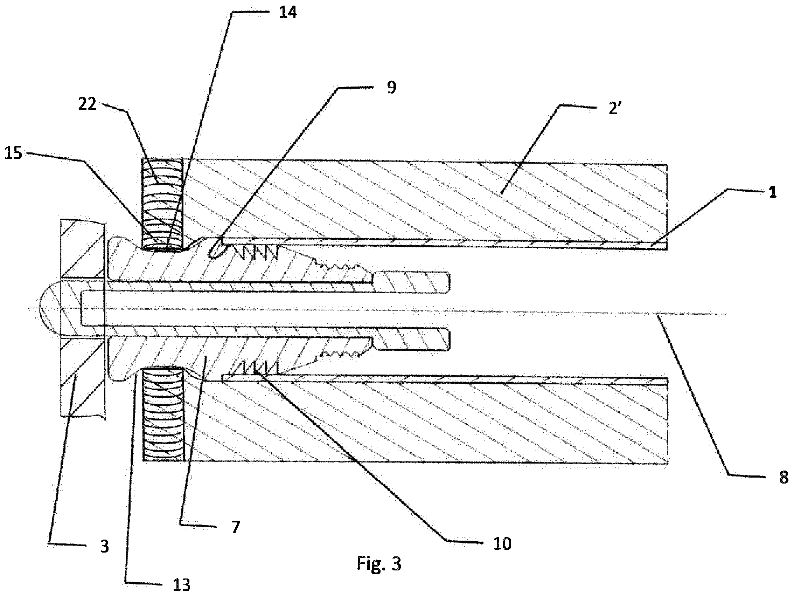

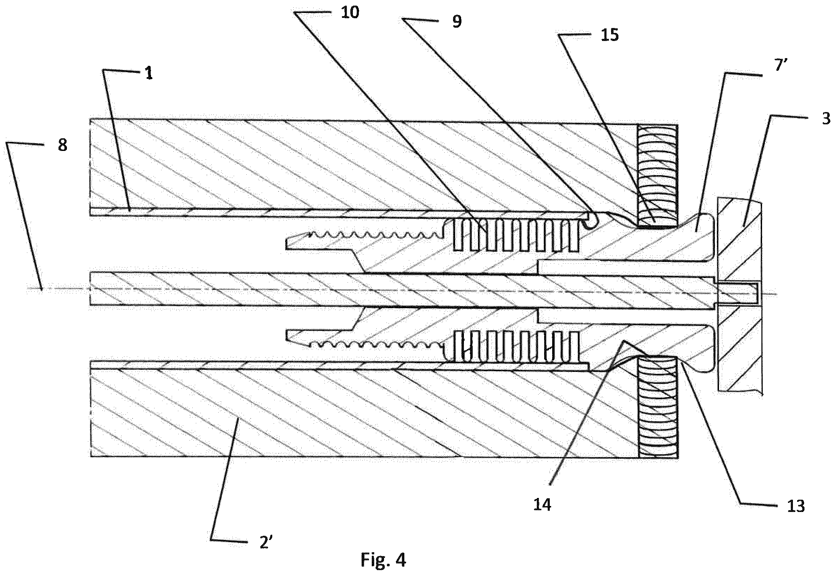

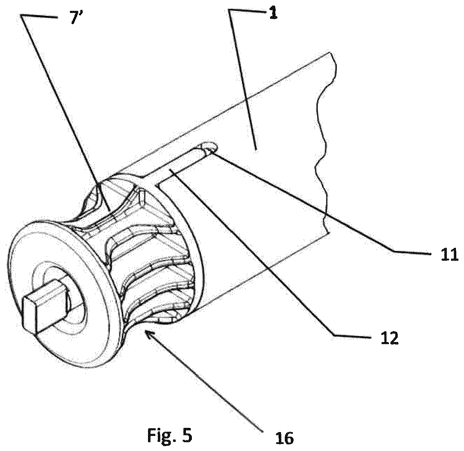

Figure 3 and 4 show sections III-III and IV-IV respectively which are indicated in figure 2. One of the mounting parts 7,7' is shown herein, in assembled position with respect to the winding shaft 1. The mounting part 7,7' is fitted into the inner part 9 of the winding shaft 1 and fits tightly herein. The mounting part 7,7' is provided with circumferential notches, hooks or ribbing 10 that may be plastically deformed during assembly of the mounting part 7,7' into the inner of the winding shaft 1 for a robust connection between the two parts. The mounting part 7,7' may have an additional integrated lock 12 cooperating with a notch 11 in the winding shaft 1 (see Fig. 5) which is provided to secure the mounting part 7,7' against radial displacement with respect to the winding shaft 1. The rollo screen 2 in figure 3 is drawn in a state where several windings of the rollo screen 2 are wound onto the winding shaft 1, furthermore several layers of the longitudinal edge 22 are stacked onto each other, which layers have a larger thickness than the remainder of the rollo screen 2'. The mounting parts 7,7 in figure 3 and figure 4 show a recessed part 13 extending in a direction parallel to the centre axis of rotation 8. As can be seen in these figures, the inner diameter 14 of the stacked longitudinal edges 22 of the rollo screen 2 is accommodated in the recessed part 13. As such the first winding 15 of the thicker longitudinal edges 22 of the rollo screen 2 will have a smaller diameter than the remainder of the rollo screen 2', hence the remainder of the rollo screen 2' can be wound tightly to the larger diameter of the outside of the winding shaft 1 thus avoiding wrinkles in the rollo screen 2. As such the result of allowing the longitudinal edge 22 to be wound up starting with a smaller diameter compared to the diameter of the winding shaft has the effect that the remainder of the screen 2' can be wound up onto the winding shaft 1 in a tighter manner, thus avoiding the wrinkles in the sunscreen material.

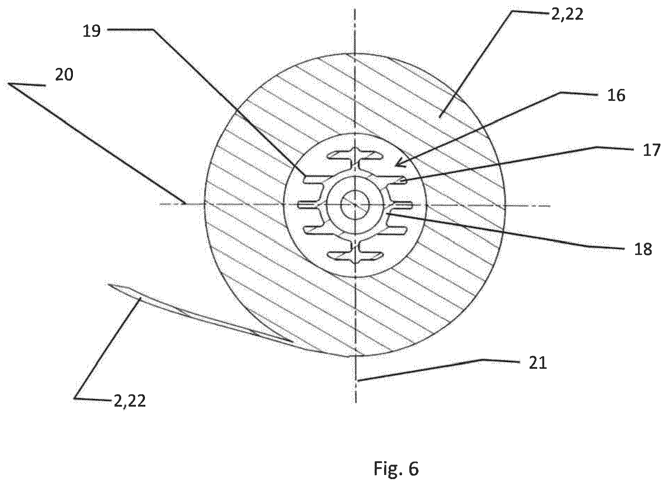

Figure 5 shows the mounting part 7,7' and partly the winding shaft 1 in an isometric view. Clearly it can be seen that in this embodiment the recessed part 13 of the mounting part 7,7' is build up by a rib structure 16. As illustrated in figure 6 the rib structure 16 provides ribs 17 that extend from a core 18 of the mounting part 7,7' towards a diameter 19 which is representing the diameter of the recessed part 13. In figure 6, which shows a section along line VI-VI in figure 2, it can be seen more clearly that the majority of the ribs 17 extend in a first plane 20 and that some ribs extend in a second plane 21 perpendicular to the first plane. Each of the ribs 17 shown comprises a draft angle (not shown but known as such). The mounting part 7,7' comprising these ribs 17 may be manufactured as a plastic part by a plastic injection moulding process.

The invention is not limited to the embodiments described before which may be varied widely within the scope of the invention as defined by the claims.

## Claims

1. Rollo assembly (5) comprising a rotatable winding shaft (1) for a rollo screen (2) mounted for rotation in a stationary mounting assembly (3) comprising a centre axis of rotation (8), said rollo screen (2) provided with transverse edges (4) extending parallel to the centre axis of rotation (8) of the winding shaft (1), one of said transverse edges being connected to the winding shaft (1), said rollo screen (2) further comprises longitudinal edges (22) extending in a direction substantially perpendicular to the centre axis of rotation (8) of the winding shaft (1) and having a particular width, said longitudinal edges (22) of the rollo screen (2) having a thickness which is substantially thicker than the remainder of the rollo screen (2'), said rollo assembly being capable of winding the rollo screen (2) onto the winding shaft (1) whereby the longitudinal edges (22) are stacked onto each other and wherein a mounting part (7,7') is connected to both opposite ends of the winding shaft (1) and wherein each of the mounting parts (7,7') is engaged to the stationary mounting assembly (3) and said mounting parts (7,7') each comprise a radial shaped recessed part(13), extending in a direction parallel to the centre axis of rotation (8) of the winding shaft (1), wherein the diameter of the recessed part (13) is substantially smaller than the outside diameter of the winding shaft(1) to provide space for the stacked longitudinal edges (22)of which a first winding (15), adjacent to the mounting part, may have a smaller diameter than the first winding of the remainder of the rollo screen (2'), **characterized in that** the surface of the recessed part (13) of the mounting part (7,7') is an open surface formed by a rib structure (16) being an integral part of the mounting part (7,7') and wherein the ribs (17) forming the rib structure (16) are oriented in a first plane (20) and in a second plane (21), perpendicular to the first plane and each of the ribs (17) comprises a draft angle relative to that plane such that the mounting part (7,7') comprising these ribs (17) may be manufactured as a plastic part by a plastic injection moulding process.

2. The rollo assembly of claim 1 wherein the recessed part(13) of the mounting part (7,7') extends in a direction parallel to the centre axis of rotation (8), over a distance that is substantially larger compared to the width of the thicker part of the longitudinal edges (22) in said direction.

3. The rollo assembly of claim 2 wherein the recessed part (13) of the mounting part (7,7') extends in a direction parallel to the centre axis of rotation (8) over the remainder of the length of the mounting part (7,7').

4. The rollo assembly of claim 1 wherein the recessed part (13) of the mounting part (7,7'), extending in a direction parallel to the centre axis of rotation (8), is provided with a first end near the winding shaft (1), and an opposite end remote from the winding shaft (1) and wherein at each of these ends the diameter of the recessed part (13) gradually decreases from a diameter which is the same as the diameter of the winding shaft to a substantially smaller diameter.

5. The rollo assembly of claim 1, wherein the ribs (17) of the rib structure (16) extend in an outward direction from a core (18) of the mounting part (7,7') towards a radial contour which is the same as the diameter of the recessed part (13).

## Patentansprüche

1. Rollo-Vorrichtung (5) mit einer drehbaren Wickelwelle (1) für eine Rollo-Wand (2), die zur Drehung in einer stationären Montagevorrichtung (3) montiert ist und die eine zentrale Drehachse (8) hat, wobei die Rollo-Wand (2) mit Querrändern (4) versehen ist, die sich parallel zu der zentralen Drehachse (8) der Wickelwelle (1) erstrecken, wobei einer der Querränder mit der Wickelwelle (1) verbunden ist, wobei die Rollo-Wand (2) ferner aufweist Längsränder (22), die sich in eine Richtung im Wesentlichen senkrecht zu der zentralen Drehachse (8) der Wickelwelle (1) erstrecken und die eine bestimmte Weite haben, wobei die Längsränder (22) der Rollo-Wand (2) eine Dicke haben, die wesentlichen dicker ist als der Rest der Rollo-Wand (2'), wobei die Rollo-Vorrichtung imstande ist, die Rollo-Wand (2) auf die Wickelwelle (1) aufzuwickeln, wodurch die Längsränder (22) aufeinander gestapelt werden, und wobei ein Montageteil (7, 7') mit beiden entgegengesetzten Enden der Wickelwelle (1) verbunden ist, und wobei jedes der Montageteile (7, 7') mit der stationären Montagevorrichtung (3) im Eingriff ist und die Montageteile (7, 7') jeweils aufweisen einen radialen geformten ausgesparten Teil (13), der sich in eine Richtung parallel zu der zentralen Drehachse (8) der Wickelwelle (1) erstreckt, wobei der Durchmesser des ausgesparten Teils (13) wesentlich kleiner ist als der Außendurchmesser der Wickelwelle (1), um Raum für die gestapelten Längsränder (22) zu schaffen, von denen eine erste Windung (15), benachbart zu dem Montageteil, einen kleineren Durchmesser haben kann als die erste Windung des Rests der Rollo-Wand (2'), **dadurch gekennzeichnet, dass** die Fläche des ausgesparten Teils (13) des Montageteils (7, 7') eine offene Fläche ist, die von einer Rippenstruktur (16) gebildet ist, die ein integraler Teil des Montageteils (7, 7') ist, und wobei die Rippen (17), welche die Rippenstruktur (16) bilden, in einer ersten Ebene (20) und in einer zweiten Ebene (21) orientiert sind, die senkrecht zu der ersten Ebene ist, und wobei jede der Rippen (17) eine Formschräge relativ zu jener Ebene hat, sodass das Montageteil (7, 7'), das diese Rippen (17) aufweist, als ein Kunststoffteil durch einen Kunststoffspritzgießformprozess hergestellt werden kann.

2. Rollo-Vorrichtung gemäß Anspruch 1, wobei der ausgesparte Teil (13) des Montageteils (7, 7') sich in eine Richtung parallel zu der zentralen Drehachse (8) erstreckt über eine Distanz, die wesentlichen größer ist im Vergleich zu der Weite des dickeren Teils der Längsränder (22) in dieser Richtung.

3. Rollo-Vorrichtung gemäß Anspruch 2, wobei der ausgesparte Teil (13) des Montageteils (7, 7') sich in einer Richtung parallel zu der zentralen Drehachse (8) über den Rest der Länge des Montageteils (7, 7') erstreckt.

4. Rollo-Vorrichtung gemäß Anspruch 1, wobei der ausgesparte Teil (13) des Montageteils (7, 7'), der sich in einer Richtung parallel zu der zentralen Drehachse (8) erstreckt, mit einem ersten Ende nahe der Wickelwelle (1) und einem entgegengesetzten Ende entfernt von der Wickelwelle (1) bereitgestellt ist, und wobei an jedem dieser Enden der Durchmesser des ausgesparten Teils (13) graduell abnimmt von einem Durchmesser aus, der der gleiche ist wie der Durchmesser der Wickelwelle, auf einen wesentlich kleineren Durchmesser.

5. Rollo-Vorrichtung gemäß Anspruch 1, wobei die Rippen (17) der Rippenstruktur (16) sich in eine Auswärtsrichtung von einem Kern (18) des Montageteils (7, 7') aus in Richtung zu einer radialen Kontur erstrecken, welche die gleiche wie der Durchmesser des ausgesparten Teils (13) ist.

## Revendications

1. Ensemble formant rouleau (5) comprenant un arbre d'enroulement rotatif (1) pour un écran formant rouleau (2) monté en vue d'une rotation dans un ensemble de montage fixe (3) comprenant un axe de rotation central (8), ledit écran formant rouleau (2) étant pourvu de bords transversaux (4) s'étendant parallèles à l'axe de rotation central (8) de l'arbre d'enroulement (1), l'un desdits bords transversaux étant raccordé à l'arbre d'enroulement (1), ledit écran formant rouleau (2) comprend en outre des bords longitudinaux (22) s'étendant dans une direction sensiblement perpendiculaire à l'axe de rotation central (8) de l'arbre d'enroulement (1) et ayant une largeur particulière, lesdits bords longitudinaux (22) de l'écran formant rouleau (2) ayant une épaisseur qui est sensiblement plus épaisse que le reste de l'écran formant rouleau (2'), ledit ensemble formant rouleau étant capable d'enrouler l'écran formant rouleau (2) sur l'arbre d'enroulement (1) moyennant quoi les bords longitudinaux (22) sont empilés les uns sur les autres et dans lequel une partie de montage (7, 7') est raccordée aux deux extrémités opposées de l'arbre d'enroulement (1) et dans lequel chacune des parties de montage (7, 7') est enclenchée avec l'ensemble de montage fixe (3) et lesdites parties de montage (7, 7') comprennent chacune une partie en retrait (13) de forme radiale s'étendant dans une direction parallèle à l'axe de rotation central (8) de l'arbre d'enroulement (1), dans lequel le diamètre de la partie en retrait (13) est sensiblement plus petit que le diamètre extérieur de l'arbre d'enroulement (1) pour fournir de l'espace aux bords longitudinaux (22) empilés dont un premier enroulement (15), adjacent à la partie de montage, peut avoir un diamètre plus petit que le premier enroulement du reste de l'écran formant rouleau (2'), **caractérisé en ce que** la surface de la partie en retrait (13) de la partie de montage (7, 7') est une surface ouverte formée par une structure à nervures (16) qui fait partie intégrante de la partie de montage (7, 7') et dans lequel les nervures (17) formant la structure à nervures (16) sont orientées dans un premier plan (20) et dans un second plan (21), perpendiculaire au premier plan et chacune des nervures (17) comprend un angle de dépouille par rapport à ce plan de sorte que la partie de montage (7, 7') comprenant ces nervures (17) puisse être fabriquée sous forme de partie en plastique par un processus de moulage par injection de plastique.

2. Ensemble formant rouleau selon la revendication 1, dans lequel la partie en retrait (13) de la partie de montage (7, 7') s'étend dans une direction parallèle à l'axe de rotation central (8), sur une distance qui est sensiblement plus grande comparée à la largeur de la partie plus épaisse des bords longitudinaux (22) dans ladite direction.

3. Ensemble formant rouleau selon la revendication 2, dans lequel la partie en retrait (13) de la partie de montage (7, 7') s'étend dans une direction parallèle à l'axe de rotation central (8) sur le reste de la longueur de la partie de montage (7, 7').

4. Ensemble formant rouleau selon la revendication 1, dans lequel la partie en retrait (13) de la partie de montage (7, 7'), s'étendant dans une direction parallèle à l'axe de rotation central (8), est pourvue d'une première extrémité près de l'arbre d'enroulement (1), et d'une extrémité opposée à distance de l'arbre d'enroulement (1), et dans lequel au niveau de chacune de ces extrémités le diamètre de la partie en retrait (13) diminue progressivement d'un diamètre qui est le même que le diamètre de l'arbre d'enroulement à un diamètre sensiblement plus petit.

5. Ensemble formant rouleau selon la revendication 1, dans lequel les nervures (17) de la structure à nervures (16) s'étendent dans une direction vers l'extérieur depuis une âme (18) de la partie de montage (7, 7') vers un contour radial qui est le même que le diamètre de la partie en retrait (13).
